# EUROPEAN PATENT APPLICATION

(11) **EP 1 503 169 A2**
(43) Date of publication of application: **02.02.2005**
(21) Application number: 04017961.6
(22) Date of filing: 29.07.2004
(51) Int. Cl.: G01B 7/06

(54) **Electrodeposition characteristic measuring device, evaluation method, and control method**

(30) Priority: 29.07.2003 JP 2003282045
(71) Applicant: KANSAI PAINT CO., LTD., Amagasaki-shi, Hyogo-ken 661-8555 (JP)
(72) Inventor: Nobuto, Kenichi, Hiratsuka-shi Kanagawa-ken (JP); Nakaoka, Toyoto, Hiratsuka-shi Kanagawa-ken (JP)
(74) Representative: Banzer, Hans-Jörg, Dipl.-Ing.

(57) **Abstract**

An electrodeposition characteristic measuring device is provided which comprises an impedance analyzer (2) having a quartz crystal (8) and a constant-current power supply unit (1). An electrodeposition characteristic measuring device is provided which comprises the impedance analyzer (2) having the quartz crystal (8) and a constant-Voltage power supply unit (1). An electrodeposition paint characteristic evaluation method is provided which comprises a step of soaking either of the above electrodeposition characteristic measuring devices in an electrodeposition paint and a step of calculating a film thickness (µm) to an applied voltage (V) under electrodeposition painting by an electrodeposition paint in accordance with a resonant frequency and/or resonant resistance shift value obtained from the quartz crystal (8).

## Description

### Field of the Invention

The present invention relates to a film thickness to an applied voltage at the time of electrodeposition-painting, an electrodeposition characteristic measuring device capable of estimating the film thickness, an electrodeposition paint characteristic evaluation method using the electrodeposition characteristic measuring device, and an electrodeposition-paint control method.

### Background and Prior Art of the Invention

An electrodeposition paint has been used so far as a sealer of an automobile body and components and are used for many painting lines.

In the case of the above painting lines, automated painting is performed in which a paint film is obtained by filling an electrodeposition bath with an electrodeposition paint, carrying an object to be pained by a conveyer or the like, applying a voltage to the object, and electrodeposition-painting, and then baking and drying the object. The automobile body is continuously painted, a paint is used as a paint film, and when a certain number of automobile bodies to be painted are counted, a paint is newly replenished to keep a paint characteristic.

Conventionally, to measure the characteristic of a paint, the paint is sampled from an electrodeposition paint bath and brought to a laboratory to measure a film thickness to a voltage and an acid quantity in the paint. One hr to three days, preferably one to three days are required for these data values to be prepared, a painting line is continuously changed during the period, correspondence to the line is delayed, and particularly a user is hastened in the case of a claim.

As a recent trend, tact-up is used in which a conveyer speed is raised for mixed loading of automobile bodies (continuously painting automobile bodies in different families) or improvement of productivity. Thus, characteristics of electrodeposition paints are changed with time more than ever and the number of cases for taking action for the change is increased.

For example, when an automobile body having a large painting area is continuously painted, a paint film is easily attached because the paint replenishment frequency increases or the organic solvent quantity in paint increases. Moreover, though a paint film is not easily attached at the beginning of next week, a film thickness may increase because an organic solvent is accumulated in an electrodeposition paint bath while a line works. Therefore, because a bring-out quantity of paint increases, the solid content of the paint in the bath decreases or the paint cost increases and thus, a claim is received from a user.

Moreover, though a membrane electrode is built in the painting line of an electrodeposition paint to adjust the acid in a bath, discharge of the acid generated due to electrolysis at the time of electrodeposition painting is delayed because a production speed is high or acid may be accumulated in a paint bath due to an equipment trouble. When acid is accumulated in the electrodeposition paint bath, a trouble occurs that the coulomb yield lowers and thereby, a film thickness is small even if turning on electricity or a pinhole is formed when painting a rust-preventive steel plate.

There is a conventional invention relating to a quartz crystal microbalance deposited-film-thickness measuring device for depositing a vapor deposition material on a quartz crystal, detecting the resonant frequency of the quartz crystal to be changed in accordance with the thickness of the deposited film, and converting the resonant frequency into a deposited film thickness (refer to Japanese Patent Laid-Open No. 1999-23245).

However, the above invention is an invention for measuring the film thickness of a sample by vapor-depositing a vapor deposition material on the surface of a quartz crystal from a vacuum evaporator but the present invention is an invention for converting a change of resonant frequencies shift of a quartz crystal into a film thickness by soaking the quartz crystal in an electrodeposition paint. Therefore, the present invention is not an invention used for an electrodeposition paint and for measuring a change of film thicknesses for the organic solvent quantity or acid quantity in an electrodeposition paint.

Moreover, there is an invention relating to a method having a feature of measuring the thickness of a copper-surface rust-preventive film according to the fact that the rust-preventive film is formed on a copper film by preparing a quartz crystal on whose surface the copper film is formed and soaking the copper film of the quartz crystal in the solution of a rust-preventive treatment agent (Japanese Patent Laid-Open No. 2002-122420).

However, the above invention is an invention for measuring the thickness of a rust-preventive treatment film on a copper film in accordance with a change of resonant frequencies shift of a quartz crystal. But the present invention is not an invention used for an electrodeposition paint and for measuring a change of film thicknesses for the organic solvent quantity or acid quantity in an electrodeposition paint.

It is a problem to be solved by the present invention to find an electrodeposition characteristic measuring device capable of measuring the electrodeposition characteristics such as a film thickness (voltage to film thickness) and Coulomb yield to an applied voltage in a short time under electrodeposition painting by an electrodeposition paint and an evaluation method and control method using the electrodeposition characteristic measuring device.

### Summary of the Invention

According to the present invention, this object is achieved by an electrodeposition characteristic measuring device as defined by claim 1 or claim 2 and an electrodeposition paint characteristic evaluation method as defined by claim 5 or claim 6. The dependent claims define preferred embodiments of the invention.

The present invention is completed by using an electrodeposition characteristic measuring device (device I) comprising an impedance analyzer having a quartz crystal and a constant-current power supply unit, or an electrodeposition characteristic measuring device (device II) comprising the impedance analyzer having the quartz crystal and a constant-voltage power supply unit and thereby soaking the quartz crystal of a device or device in an electrodeposition paint, and finding that electrodeposition characteristics such as a film thickness (µm) to an applied voltage (V) and Coulomb efficiency (mg/C) at the time of electrodeposition-painting can be estimated.

That is, the present invention relates to:
1. an electrodeposition characteristic measuring device comprising the impedance analyzer having the quartz crystal and the constant-current power supply unit;
2. an electrodeposition characteristic measuring device comprising the impedance analyzer having the quartz crystal and a constant-voltage power supply unit;
3. an electrodeposition characteristic evaluation method for soaking the electrodeposition characteristic measuring device according to the above Item 1 or 2 in an electrodeposition paint and calculating a film thickness (µm) to an applied voltage (V) under electrodeposition painting by an electrodeposition paint in accordance with a resonant frequency and/or resonant resistance shift value obtained from the quartz crystal;
4. an electrodeposition characteristic evaluation method for soaking the electrodeposition characteristic measuring device according to the above Item 1 or 2 in an electrodeposition paint and calculating the Coulomb yield (mg/C) of the electrodeposition paint in accordance with a resonant frequency and/or resonant resistance shift value obtained form the quartz crystal;
5. the electrodeposition characteristic evaluation device according to claim 1, in which the range of a current density according to the constant-current power supply unit ranges between 10 and 5,000 µA/cm²;
6. the electrodeposition characteristic evaluation device according to claim 2, in which a voltage according to the constant-voltage power supply unit ranges between 10 and 500 V; and
7. a method for controlling an electrodeposition paint by using the electrodeposition characteristic evaluation method according to any one of the above Items 5 to 6.

The present invention relates to an electrodeposition characteristic measuring device comprising the impedance analyzer having the quartz crystal and the constant-current power supply unit, an electrodeposition characteristic measuring device comprising the impedance analyzer having the quartz crystal and the constant-voltage power supply unit, and an electrodeposition characteristic evaluation method and control method using these electrodeposition characteristic measuring devices.

The present invention makes it possible to measure a paint characteristic in real time by noticing that a resonant frequency and resonant resistance shift value in an equivalent circuit are changed depending on the viscoelastic characteristic of a paint film formed on the surface of the quartz crystal.

Conventionally, to measure a paint characteristic, a paint is sampled from a bath filled with paint and brought back to a laboratory to measure a voltage to film thickness, Coulomb yield, and polarization resistance value. However, 1 hr to 3 days are required for these data values to be prepared and a painting line is continuously changed during the period. Therefore, corresponding to the line may be frequently delayed. In the case of the present invention, however, because an accurate paint characteristic can be obtained in a short time, it is possible to quickly correspond to the line in accordance with the obtained data. Therefore, the time, labor, and cost required for electrodeposition paint line control can be greatly reduced.

### Brief Description of the Drawings

Fig. 1 is a model view of an electrodeposition characteristic measuring device of the present invention;
Fig. 2 is a model view of a quartz crystal unit;
Fig. 3 is a graph of "resonant frequency" and "current carrying time" obtained by using the measuring device in Fig. 1.

### Detailed Description of the Invention

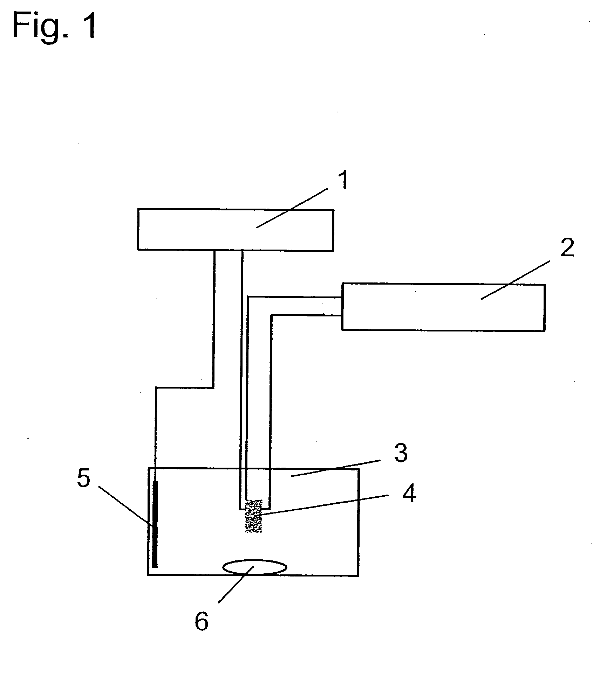

The present invention is a method for measuring the characteristic of an electrodeposition paint by using an electrodeposition characteristic measuring device I or an electrodeposition characteristic measuring device II and is shown by the circuit shown in Fig. 1.

As shown in Fig. 1, the electrodeposition characteristic measuring device I comprises a constant-current power supply unit 1 and an impedance analyzer 2 being coupled to a quartz crystal unit 4 to be positioned in an electrodeposition paint bath 3. Furthermore, a stirrer 6 is located in the electrodeposition paint bath 3, and an electrode 5 coupled to the constant-current power supply unit 1 is also positioned in the electrodeposition paint bath 3.

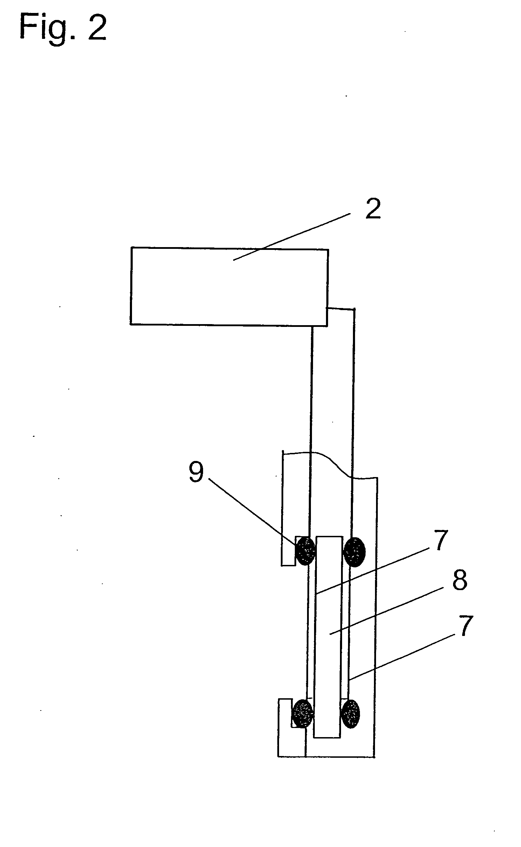

As can be taken from Fig. 2, the quartz crystal unit 4 comprises platinum electrodes 7 contacting and holding a quartz crystal 8. Reference numeral 9 designates a sealing in Fig. 2.

In the case of the electrodeposition characteristic measuring device II, the constant-current power supply unit 1 is replaced by a constant-voltage power supply unit 1. Except for this replacement, the electrodeposition characteristic measuring device II uses and comprises the same components as the electrodeposition characteristic measuring device I so that reference can be made to the above description of Figs. 1 and 2.

By using the above devices I or II, electrodeposition characteristics can be measured in accordance with the following procedure.

### Step 1:

The quartz crystal unit 4 is soaked in the electrodeposition paint 3.

### Step 2: [When using the device I]

A paint film is formed on the surface of the quartz crystal unit 4 which is an object to be painted by applying a current to the quartz crystal 8 through the constant-current power supply unit 1.

In this case, it is preferable that the current value supplied from the constant-current power supply unit 1 ranges between 10 and 2,000 µA/cm², preferably ranges between 10 and 1,000 µA/cm² and as a measuring time ranging between 10 sec to 10 min, preferably between 1 and 5 min is suitable for an electrodeposition paint to precipitate on the surface of the quartz crystal 8.

### Step 2: [When using the device II]

By applying a voltage to the quartz crystal unit 4 which is an object to be painted through the constant-voltage power supply unit 1, a paint film is formed on the surface of the quartz crystal 8.

It is preferable that a voltage supplied from the constant-voltage power supply unit 1 in the above case ranges between 10 and 500 V, preferably between 100 and 400 V and a measuring time ranging between 10 sec and 10 mi, preferably between 1 and 5 min is suitable for an electrodeposition paint to precipitate on the surface of the quartz crystal 8.

When painting an electrodeposition paint, either side of a quartz crystal is painted and an AT-cut (cutting method in which quartz is not influenced by a temperature change) quartz piece having a resonant frequency of 9 MHz is used for the quartz crystal serving as a sensor. The painted quartz crystal 8 can measure the frequency and impedance at the resonant point of the quartz crystal by an impedance analyzer in the same period (real time) and obtain a resonant frequency and resonant resistance shift value. The resonant frequency and resonant resistance shift value correspond to the viscoelastic characteristic of a painted paint.

The impedance analyzer 2 can convert a change of resonant frequencies shift or resonant resistance shift values of a equivalent circuit into
(1) a film thickness to be formed on an object to be painted by electrodeposition painting for an equivalent certain time when soaking the object to be painted in an electrodeposition paint and applying a voltage (hereafter may be referred to as "voltage to film thickness") or
(2) the weight of a paint film precipitated in accordance with the unit quantity of electricity (hereafter may be referred to as Coulomb yield (mg/C).

In the painting line, it is possible to detect a change of "voltage to film thickness" or "Coulomb yield (mg/C)" by detecting a resonant frequency and resonant resistance shift value in real time. For example, when increase of a film thickness is detected in the painting line, an action for reduction of a film thickness due to a change of painting temperatures or disuse of an organic solvent is taken. Moreover when decrease of the Coulomb yield is detected, it is possible to quickly perform the correspondence of disusing a UF filtrate and adjust the acid concentration in a paint.

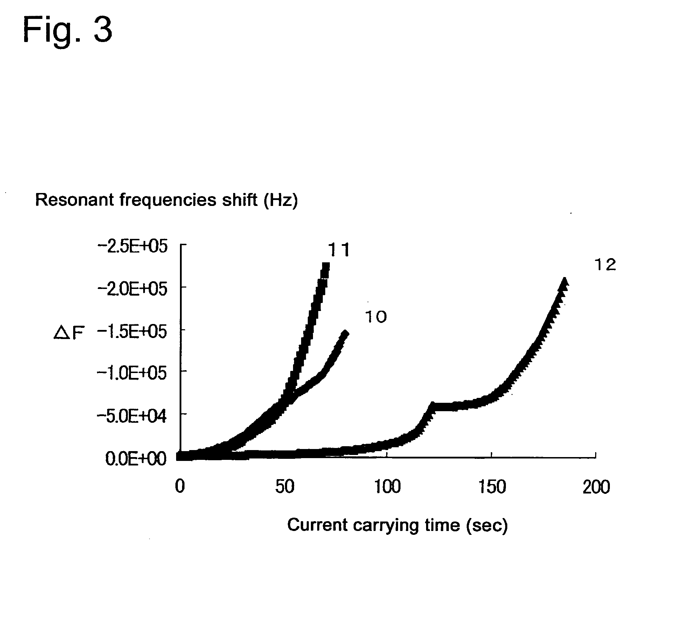

For example, Fig. 3 is obtained by using the present measuring device and thereby plotting a change of resonant frequencies shift to a measuring time. Reference numeral 10 designates an electrodeposition paint A, reference numeral 11 designates an electrodeposition paint B, and reference numeral 12 designates an electrodeposition paint C.

By adding an organic solvent and acid to an electrodeposition paint, a resonant frequency and resonant resistance shift value are changed. Therefore, the present invention can detect a change of "voltage to film thickness" and a change of "Coulomb yield (mg/C)" by using a change of resonant frequencies shift and a change of resonant resistance shift values.

Moreover, in the case of the measurement using the present measuring device, it is an essential condition to keep an electrodeposition paint at a constant temperature (e.g. 28°C) and a constant stirring condition, and a distance between the quartz crystal unit 4 and an electrode constant.

It is possible to convert the data obtained by repeatedly superimposing the data for a resonant frequency and a resonant resistance shift value measured under constant conditions into "voltage to film thickness" and "Coulomb yield (mg/C)".

For example, in the case of "voltage to film thickness", though a standard paint has a film thickness of 20 µm at 250 V and, a paint to which an organic solvent is added has a film thickness of 22 µm at 250 V. In the case of "Coulomb yield (mg/C)", though the standard paint has 36 mg/C, a paint to which acid is added has 32 mg/C.

The impedance analyzer 2 used for a measuring device of the present invention can measure an impedance by continuing oscillation up to 20 kQ preferably up to a high load of 30 kOand the characteristic of a precipitated paint (paint film) having viscosity and elasticity in accordance with a change of resonant resistance shift values in a circuit.

The impedance analyzer 2 can use a generally-marketed analyzer and it is possible to use AFFINIX Q made by Initium Co., Ltd.
(http://www.initium2000.com). However, it is preferable to use a quartz crystal chemical measuring system (trade name of SEIKO EG&G Co., Ltd.; Impedance analyzer having quartz crystal) for an evaluation method of electrodeposition characteristics of the present invention.

In the case of a conventional measuring method of electrodeposition characteristics [voltage to film thickness, Coulomb yield (mg/C)], an electrodeposition painting plate is obtained by sampling a paint from a painting line, bringing it back to a laboratory, applying electrodeposition painting to an object to be painted while stirring an electrodeposition paint at a constant temperature, washing it with water, and then baking and drying it at 140 to 200°C for 10 to 90 min.

Thereafter, (1) the film thickness of the electrodeposition painting plate is measured by using a thickness meter to obtain "voltage to film thickness". (2) A Coulomb yield (mg/C) is obtained in accordance with a weight change of the electrodeposition painting plate and the electricity quantity (Coulomb).

However, lots of man-hour and time such as labor required for transport of samples and experiments are necessary before the data values in the above Items (1) and (2) are prepared. However, by using an evaluation method of electrodeposition paint characteristics of the present invention, it is possible to calculate a change of voltage to film thickness and a change of Coulomb yield in a short time of several seconds to 5 min.

Electrodeposition paint:
As electrodeposition paints used for the present invention, it is possible to measure a cation electrodeposition paint and an anion electrodeposition paint. In the case of the cation electrodeposition paint, the quartz crystal unit 4 is connected to a negative electrode and in the case of the anion electrodeposition paint, the quartz crystal unit 4 is connected to a positive electrode.

Because the cation electrodeposition paint becomes the main stream for automobile bodies and components as an electrodeposition paint, the cation electrodeposition paint is described below. The cation electrodeposition paint is manufactured by using an amine-added epoxy resin or amine-added acrylic resin as a basic resin, adding emulsion obtained by adding blocked isocyanate, surface adjustor, catalyst, surface active agent, organic solvent, and neutralizing agent as hardening agents and water-dispersing them and adding a pigment paste obtained by pigment-dispersing a coloring pigment, extender pigment, and catalyst together with a scattering resin, and diluting them with deionized water.

The solid content of the cation electrodeposition paint ranges between 0.1 and 40 wt%, preferably ranges between 5 and 30 wt%, more preferably ranges between 15 and 15 wt% and pH ranges between 5.0 and 7.5, preferably ranges between 5.5 and 7.0. It is possible to optionally adjust a sample quantity of an electrodeposition paint used for measurement in the present invention between 10 ml and 300 m³. When the quartz crystal 8 can be soaked, measurement can be performed with no problem.

### Examples

The present invention is described below more minutely by using examples. The present invention is not restricted to the examples. The terms "part" and "%"denote "part by weight" and "percent by weight".

A device for calculating an electrodeposition characteristic:
Electrodeposition characteristic measuring devices having the following (1) to (3) are prepared, connected as shown in Fig. 1, and used for examples.
   (1) Impedance analyzer 2 made by SEIKO EG&G Co., Ltd.
   (2) Quartz crystal unit 4
   (3) Constant-current measuring device 1 made by TAKASAGO Co., Ltd.

### Example 1

A quantity of 500 m³ of an electrodeposition paint A sampled from an automobile painting line is put in the electrodeposition paint bath (symbol 3 in Fig. 1). A bath temperature is set to 28°C, a constant current of 800 µA/cm² is supplied to a circuit by using the electrodeposition characteristic measuring device I of the present invention to coat a quartz crystal with the electrodeposition paint A.

Measurement results are shown below.

The time passed until a resonant frequency (ΔF) reaches 1 × 10⁵ Hz is 68 sec. The resonant resistance shift value when the resonant frequency (ΔF) is 1 × 10⁵ Hz is 6,000 O. It is estimated that a film thickness is 25 µm and a Coulomb yield is 35 mg/C when performing electrodeposition painting for 3 min at 250 V in accordance with the above numerical values.

The time required to calculate the above data is approx. 5 min.

### Example 2

A quantity of 500 m³ of an electrodeposition paint B sampled from the automobile painting line is put in the electrodeposition paint bath (symbol 3 in Fig. 1). A bath temperature is set to 28°C and a constant current of 800 µA/cm² is supplied to the circuit by using the electrodeposition characteristic measuring device I of the present invention to coat a quartz crystal with the electrodeposition paint B.

Measurement results are shown below.

The time passed until the resonant frequency (ΔF) reaches 1× 10⁵ Hz is 55 sec. Moreover, the resonant resistance shift value when the resonant frequency (ΔF) is 1× 10⁵ Hz is 5,800 O. It is estimated that a film thickness is 25 µm and a Coulomb yield is 35 mg/C when performing electrodeposition painting for 3 min at 250 V in accordance with the above numerical values.

It is estimated that a film thickness is 27 µm and a Coulomb yield is 37 mg/C when performing electrodeposition painting for 3 min at 250 V in accordance with the above numerical values.

The time required to calculate the above data is approx. 5 min.

### Example 3

A quantity of 500 cm³ of an electrodeposition paint sampled from the automobile painting line is put in the electrodeposition paint bath (symbol 3 in Fig. 1). A bath temperature is set to 28°C and a constant voltage of 250 V is applied to the circuit by using the electrodeposition characteristic measuring device II to coat the quartz crystal with the electrodeposition paint C.

Measurement results are shown below.

The time passed until the resonant frequency (ΔF) reaches 1 × 10⁵ Hz is 165 sec. Moreover, the resonant resistance shift value when the resonant frequency (ΔF) is 1× 10⁵ Hz is 3,000 O.

It is estimated that a film thickness is 23 µm and a Coulomb yield is 34 mg/C when performing electrodeposition painting for 3 min at 250 V.

The time required to calculate the above data is approx. 5 min.

### Comparative Example 1

Electrodeposition painting is applied to a cold-rolled steel plate (7 × 10×15 cm) to which a chemical conversion treatment is applied for 3 min at 250 V by using the electrodeposition paint A same as the case of Example 1 and setting a bath temperature to 28°C. Thereafter, a test plate is obtained by washing the cold-rolled steel plate with water and baking and drying it for 20 min at 170°C. A film thickness of 26 µm, a Coulomb yield (note 1) of 34 mg/C, and a polarization resistance value (note 2) of 1,350 kO· cm² are obtained from the test plate. The time required to calculate the above characteristics is approx. 2 hr.

### Comparative Example 2

Electrodeposition painting is applied to a cold-rolled steel plate (7 × 10×15 cm) to which a chemical conversion treatment is applied for 3 min at 250 V by using the electrodeposition paint B same as the case of Example 1 and setting a bath temperature to 28°C. Thereafter, a test plate is obtained by washing the cold-rolled steel plate with water and baking and drying it for 20 min at 170°C. A film thickness of 26 µm, a Coulomb yield of 35.5 mg/C, and a polarization resistance value of 1, 330 kO· cm² are obtained from the test plate. The time required to calculate the above characteristics is approx. 2 hr.

### Comparative Example 3

Electrodeposition painting is applied to a cold-rolled steel plate (7 x 10×15 cm) to which a chemical conversion treatment is applied for 3 min at 250 V by using the electrodeposition paint B same as the case of Example 1 and setting a bath temperature to 28°C. Thereafter, a test plate is obtained by washing the cold-rolled steel plate with water and baking and drying it for 20 min at 170°C. A film thickness of 23 µm, a Coulomb yield of 34.2 mg/C, and a polarization resistance value of 1,320 kO· cm² are obtained from the test plate. The time required to calculate the above characteristics is approx. 2 hr.

Table 1 shows result s of the Examples. Table 2 shows those of the Comparative Examples.

**Table 1**

| | | Example 1 | Example 2 | Example 3 |
|---|---|---|---|---|
| | | Measuring method of the present invention | ← | ← |
| Electrodeposition paint | | A | B | C |
| Paint temperature | | 28 | ← | ← |
| Electrodeposition characteristic measuring device | Time (sec) passed until resonant frequency reaches -10⁵ Hz | 68 | 55 | 165 |
| Data | Resonant resistance shift (Ω) | 6,000 | 5,800 | 3,000 |
| Paint characteristics Paint characteristics | Film thickness | 25 | 27 | 23 |
| | (Difference from conventional measuring method) | 1 | 1 | |
| | Coulomb yield | 35 | 37 | 34 |
| | (Difference from conventional measuring method) | 1 1 | 1.5 1.5 | 0.2 0.2 |
| Time required for measurement (min) | | 5 min | 5 min | 5 min |

**Table 2**

| | | Comparative Example 1 | Comparative Example 2 | Comparative Example 3 |
|---|---|---|---|---|
| | | Conventional measuring method | ← | ← |
| Electrodeposition paint | | A | B | C |
| Paint temperature | | 28 | ← | ← |
| Paint characteristics | Film thickness | 26 | 26 | 23 |
| | Coulomb yield (Note 1) | 34 | 35.5 | 34.2 |
| Time required for measurement (min) | | 2 hr | 2 hr | 2 hr |
| Note 1 Coulomb yield (mg/C): Value obtained by measuring the quantity of electricity (Coulomb) flown for 3 min since start of current carrying and dividing the paint film weight (mg) during the period by the quantity of electricity (Coulomb) | | | | |

### Industrial Applicability

Because the characteristic of an electrodeposition paint can be calculated in real time, an action for the change of the paint is quickly taken. Therefore, extra film thickness and current carrying are prevented and this is effective for energy saving and cost saving.

## Claims

1. An electrodeposition characteristic measuring device comprising an impedance analyzer (2) having a quartz crystal (8) and a constant-current power supply unit (1).

2. The electrodeposition paint characteristic measuring device according to Claim 1, **characterized in that** a range of a current density by the constant-current power supply unit (1) ranges between 10 and 5,000 µA/cm².

3. An electrodeposition characteristic measuring device comprising an impedance analyzer (2) having a quartz crystal (8) and a constant-voltage power supply unit (1).

4. The electrodeposition paint characteristic measuring device according to Claim 3, **characterized in that** a range of a voltage by the constant-voltage power supply unit (1) ranges between 10 and 500 V.

5. An electrodeposition paint characteristic evaluation method comprising a step of soaking the electrodeposition characteristic measuring device of any one of Claims 1-4 in an electrodeposition paint and a step of calculating a film thickness (µm) to an applied voltage (V) under electrodeposition painting by an electrodeposition paint in accordance with a resonant frequency and/or resonant resistance shift value obtained from the quartz crystal (8).

6. An electrodeposition paint characteristic evaluation method comprising a step of soaking the electrodeposition characteristic measuring device of any one of Claims 1-4 in an electrodeposition paint and a step of calculating a Coulomb yield (mg/C) of an electrodeposition paint in accordance with a resonant frequency and/or resonant resistance shift value obtained from the quartz crystal (8).

7. A method for controlling an electrodeposition paint by using the electrodeposition paint characteristic evaluation method of any one of Claims 5 to 6.
